Europäisches Patentamt

European Patent Office

Office européen des brevets

(11) Publication number: **0 196 405**
**B1**

(12) **EUROPEAN PATENT SPECIFICATION**

(45) Date of publication of patent specification: **18.07.90**

(21) Application number: **86100483.6**

(22) Date of filing: **16.01.86**

(51) Int. Cl.⁵: **G 03 G 15/32**

(54) **Color picture reader and method for operating the same.**

(30) Priority: **30.03.85 JP 67856/85**

(43) Date of publication of application:
**08.10.86 Bulletin 86/41**

(45) Publication of the grant of the patent:
**18.07.90 Bulletin 90/29**

(84) Designated Contracting States:
**DE FR GB IT NL**

(56) References cited:
**EP-A-0 140 244**
**DE-A-3 420 359**
**US-A-4 408 231**
**US-A-4 458 264**

**Colour Science ... by Guenter Wyszecki and W.S.
Steiles, 2nd edition, Wily 1982, p.120-121**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Sekizawa, Hidekazu**
**9-402 Denen-Aobadai 1-11-4 Aobadai Midori-ku**
**Yokohama-shi Kanagawa-ken (JP)**
Inventor: **Kawakami, Haruko**
**305-go,Narashinodai-manshion 2-20-
8,Nishinarashino**
**Funabashi-shi Chiba-ken (JP)**
Inventor: **Yamamoto, Naofumi**
**3-12-23, Kamisoshigaya**
**Setagaya-ku Tokyo (JP)**

(74) Representative: **Hoffmann, Klaus, Dr. rer. nat.
et al**
**Hoffmann . Eitle & Partner Patentanwälte**
**Postfach 81 04 20 Arabellastrasse 4**
**D-8000 München 81 (DE)**

Courier Press, Leamington Spa, England.

## Description

The present invention relates to a color picture reader that is applied to a color copying device or the like.

In the prior art, color picture readers have made use of a light source with high color rendering properties, such as a halogen lamp, in order to obtain satisfactory color separation characteristics. By using such a light source, the spectral distribution can be kept constant by keeping the applied voltage at a constant value so that handling of the device is relatively easy. However, such a light source has low efficiency and generates a large amount of heat. Hence it has been difficult to use it with a device which has small dimensions. For this reason, a fluorescent lamp has been considered to replace it as the light source.

A fluorescent lamp has a satisfactory emission efficiency, and moreover, its spectral distribution can be varied fairly freely by appropriately combining a purality of different kinds of phosphors. Consequently, by combining a fluorescent lamp that possesses such properties with a read sensor, it becomes comparatively easy to achieve satisfactory color separability. However, the temperature of the tube wall of a fluorescent lamp becomes low when the temperature of the environment is low, and hence, the quantity of emitted light is reduced. The emissive spectral distribution is also different, compared with the rated values (values at the tube wall temperature around 45°C). In addition, the emission spectrum varies depending upon the length of its use. Moreover, the properties of the fluorescent tubes at the time of their manufacture also vary widely. Therefore, when a color original is read using such a light source, even with a correction for the brightness, the color separated signals that are obtained will be different from those at the rated conditions. This gives rise to a shortcoming in that truly color separated signals cannot be obtained and that the color signals that are obtained are different from the actual color originals.

In attempts to remove these drawbacks, two methods have been considered: The first involves waiting for a fixed length of time, with the light source turned on, after closing down the power source; the second employs a device in which a heating element is arranged around the fluorescent lamp to control the temperature of the tube wall. However, in the former method, the time required for stabilizing the light source varies with the temperature of the environment, so that it is not a satisfactory way to achieve stabilization of the light source. Regarding the control of the temperature, the control that is given may not necessarily be applied to the section from which the light is actually being emitted. Thus, there exists a drawback in that it is not easy to keep the emissive spectral distribution constant. Furthermore, variations in the emissive spectral distribution is a phenomenon which is not peculiar to fluorescent lamps but commonly occurs in many other light sources. It is an object of the present invention to provide a color picture reader, and a method for operating the same, that are adapted for obtaining accurate and stabilized color separated signals.

It is another object of the present invention to provide a device and a method by which it is possible to accurately read a color picture. This is achieved by carrying out an appropriate color correction, even when the conditions of the light source change due to changes in the environmental temperature.

It is still another object of the present invention to provide a color picture reader, and a method, that are adapted for obtaining accurate and stabilized color separated signals, even when the original light source is replaced by another.

According to one aspect of the invention, there is provided a color picture reader comprising:
— a light source for radiating light on an object to be read
— control means for controlling the light source; and
— light receiving means for receiving light reflected from the object and for generating a plurality of color separated signals from the received light, characterised in that there are provided:
(a) a white reference plate as object to be read;
(b) means for computing a reference value by generating a mean value of color separated signals from light received from said reference plate and to store the reference value; and
(c) means for comparing an updated mean value generated from color separated signals from light reflected from the white reference plate, with the reference value;
and in that the means for controlling the light source are controllable so as to minimize the diference between updated value and the reference value.

According to a further aspect of the invention, there is provided a method of stabilizing the spectral distribution of the light of a light source in a color picture reader which light source radiates light on an object to be read, which light is reflected from the object and received by light receiving means which generate a plurality of color separated signals from the received light, characterized in that:
(a) the light is radiated on a white reference plate and, from the light reflected, a plurality of color separated signals is generated, the mean value of which is stored as a reference value;
(b) an updated mean value is generated and compared with the reference value; and
(c) the light source is controlled so as to minimize the difference between the updated value and the reference value.

According to another aspect of the invention there is provided a color picture reader comprising:
a light source for radiating light on an object to be read; and
light receiving means for receiving light from the object to be read, and for obtaining a plurality of color separated signals based on the light received; characterized by:

EP 0 196 405 B1

(a) a white reference plate as object to be read;

(b) means to compute a reference value by generating a mean value of color separated signals from light received from said reference plate and to store the reference value;

(c) means for comparing an updated mean value generated from color separated signals from light reflected from the white reference plate, with the reference value; and

(d) a compensation circuit arranged to set a compensation matrix for correcting the color separated signals obtained in accordance with the variations in the light from the light source based on the output of the comparing means.

According to another aspect of the invention, there is provided a method of stabilizing the spectral distribution of the light of a light source in a color picture reader which light source radiates light on an object to be read, which light is reflected from the object and received by light receiving means which generate a plurality of color separated signals from the received light, characterized in that:

(a) the light is radiated on a white reference plate and, from the light reflected, a plurality of color separated signals is generated, the mean value of which is stored as a reference value;

(b) an updated mean value is generated and compared with the reference value;

(c) a compensation matrix is calculated for cancelling variations in the light from the light source based on the reference value and the color separated signals; and

color collection is carried out by transforming the plurality of color separated signals for the object by means of the matrix.

Instead of the white reference plate of the last mentioned aspect of the invention, a reference plate of a red series can be employed.

These and other objects, features and advantages of the present invention will be more apparent from the following description of the preferred embodiments, taken in conjunction with the accompanying drawings, in which:

Fig. 1 is a diagram illustrating an embodiment of the color picture reader in accordance with the present invention,

Fig. 2 is a flow chart showing the control of the light source for another embodiment of the present invention,

Fig. 3 is a partial diagram of the color picture reader for illustrating a further embodiment of the present invention,

Fig. 4 is a diagram showing the correspondence between the color separated signals and the matrices that are used in yet another embodiment, and

Fig. 5 is a flow chart illustrating the method of determining the matrix used in the previous embodiment.

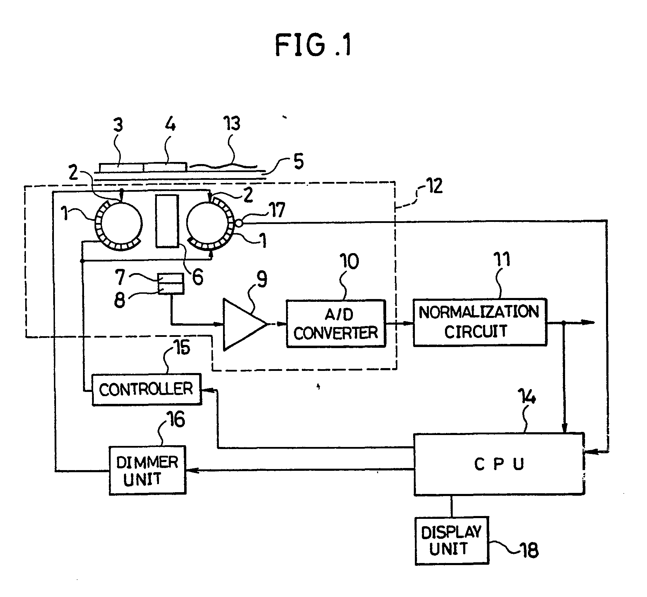

Figure 1 is a diagram which illustrates an embodiment of the color picture reader in accordance with the present invention. The reference numeral 1 is a heating element, 2 is a light source, 3 is a black reference plate, 4 is a white reference plate, 5 is a glass plate, 6 is a rod lens array, 7 is a color filter assembly, 8 is a solid sensor assembly, 9 is an amplifier, 10 is an A/D converter, 11 is a normalization circuit, 12 is a movable portion, 13 is an original, 14 is a CPU, 15 is a controller for the heating element, 16 is a dimmer unit for the light source 2, 17 is a temperature sensor, and 18 is a display unit.

Prior to reading the original 13, the black reference plate 3 and the white reference plate 4 are irradiated through the glass plate 5 by the light source 2 that has the heating element 1. The reflected light from the reference plate is trichromatically already focused on the solid sensor 8, (for instance a CCD) by means of the rod lens array having passed through the color filter 7.

The received light is converted photoelectrically, amplified by the amplifier 9, and converted to a digital signal by the A/D converter 10. The digitized signal is normalized in the normalization circuit 11. The reflected light from the black reference plate 3 is first focused, and the signals $B_i$ ($i = 1, 2,$ and 3 corresponding to the three colors of the filter 7) from the solid sensor 8 are memorized in the normalization circuit 11. In this case, the light source 2 may or may not be turned on. Then, with the light source 2 turned on, the movable section 12 enclosed by the broken line in Figure 1, is moved to read the signals $W_i$ ($i = 1, 2,$ and 3) for the reflected light from the white reference plate 4, and the signals ($W_i - B_i$) are memorized by the normalization circuit 11. The movable section 12 is further moved to read the original 13 and obtains the signals $S_i$ ($i = 1, 2,$ and 3), and generates

$$X_i = (S_i - B_i)/(W_i - B_i) \qquad (1)$$

as the output signals of the normalization circuit 11. The output signal $X_i$ of the normalization circuit 11 represents the value that is corrected for the distribution of light quantity of the light source, the scatter in the consistency of the color filter 7, and the scatter in the sensitivity of the solid sensor 8, that is, the value that is shading — corrected. Accordingly, the normalization will give $X_i = 1$ if it is a white original and $X_i = 0$ if it is a black original.

However, when the light quantity distribution or the emission distribution of the light source 2 does not remain constant, satisfactory color separation cannot be accomplished due to the changes that occur in the shading-corrected color separated signals in response to the variations in the light source 2. Therefore, it becomes necessary either to control the light source 2 so as to keep the spectral distribution constant or to

3

compensate for the effects due to variations in the spectral distribution of the light source 2. Initially, in the embodiment that follows, a description will be given of the method for controlling the spectral distribution or the like of the light source so that it remains constant.

Now, calling the spectral characteristics of the color filter $f_i(\lambda)$ ($i = 1, 2,$ and $3$) and the spectral sensitivity of the solid sensor 8 $S(\lambda)$, the spectral characteristics of the quivalent filter $\overrightarrow{F}$ is defined by the following equation:

$$\overrightarrow{F} = \begin{pmatrix} F_1 \\ F_2 \\ F_3 \end{pmatrix} \qquad \ldots \ldots \quad (2)$$

where

$$F_i(\lambda) = f_i(\lambda)\, S(\lambda). \tag{3}$$

Further, by calling the emission spectral distribution of the light source 2 $L_0(\lambda)$, the color separated signal $\overrightarrow{W}_0$ is represented by the following equation.

$$\overrightarrow{W}_0 = \begin{pmatrix} W_{01} \\ W_{02} \\ W_{03} \end{pmatrix} = \begin{pmatrix} \int F_1(\lambda)L_0(\lambda)d\lambda \\ \int F_2(\lambda)L_0(\lambda)d\lambda \\ \int F_3(\lambda)L_0(\lambda)d\lambda \end{pmatrix} \qquad \ldots \ldots \quad (4)$$

It should be noted that $\overrightarrow{W}_0$ in the above formula corresponds to the values in which the signal outputs $B_i$ (that are obtained by reading the black reference plate 3) have already been subtracted. The sensor outputs will be treated in the following, it should be also be understood that they correspond to the values from which $B_i$ has been subtracted.

Next, suppose that the spectral distribution of the light source changed from $L_0(\lambda)$ to $L_1(\lambda)$, namely,

$$L_1(\lambda) = aL_0(\lambda) + \delta L(\lambda) \tag{5}$$

In the above equation, a represents change in the brightness and $L(\lambda)$ represents the change in the spectral distribution that satisfies the following condition:

$$\sum_{i=1}^{3} \left( \int L(\lambda)F_i(\lambda)d\lambda = 0 \right.$$

It should be remembered that for an ordinary light source one may assume that $|aL_0(\lambda)| >> |(\lambda)|$. In this case the color separated signals $\overrightarrow{W}_1$ read from the white reference plate 4 after the variation in the spectral distribution of the light source, are represented by the following equation.

$$W_1 = \begin{pmatrix} W_{11} \\ W_{12} \\ W_{13} \end{pmatrix} = \begin{pmatrix} \int F_1(\lambda)\, L_1(\lambda)\, d\lambda \\ \int F_2(\lambda)\, L_1(\lambda)\, d\lambda \\ \int F_3(\lambda)\, L_1(\lambda)\, d\lambda \end{pmatrix}$$

$$= a\begin{pmatrix} \int F_1(\lambda)\, L_0(\lambda)\, d\lambda \\ \int F_2(\lambda)\, L_0(\lambda)\, d\lambda \\ \int F_3(\lambda)\, L_0(\lambda)\, d\lambda \end{pmatrix} + \begin{pmatrix} \int F_1(\lambda)\, \delta L(\lambda)\, d\lambda \\ \int F_2(\lambda)\, \delta L(\lambda)\, d\lambda \\ \int F_3(\lambda)\, \delta L(\lambda)\, d\lambda \end{pmatrix}$$

$$= a\,\overrightarrow{W_0} + \begin{pmatrix} \int F_1(\lambda)\, \delta L(\lambda)\, d\lambda \\ \int F_2(\lambda)\, \delta L(\lambda)\, d\lambda \\ \int F_3(\lambda)\, \delta L(\lambda)\, d\lambda \end{pmatrix}$$

If the mean value of the components of the color separated signals $\overrightarrow{W}_0$ is called $\overline{W}_0$, and the corresponding value after the variation $\overrightarrow{W}_1$ is called $\overline{W}_1$, they may be given respectively by the following expressions.

4

$$\overline{W}_O = (1/3) \sum_{i=1}^{3} \left( F_i(\lambda) L_O(\lambda) d\lambda \right), \quad \cdots\cdots \quad (6)$$

$$\overline{W}_1 = (1/3) \sum_{i=1}^{3} \left( F_i(\lambda) L_1(\lambda) d\lambda \right.$$

$$= (1/3) \sum_{i=1}^{3} \left( F_i(\lambda) a L_O(\lambda) d\lambda \right.$$

$$= a\overline{W}_O \quad \cdots\cdots \quad (7)$$

Next, the color separated signal $\overrightarrow{W}_0$ read from the white reference plate (prior to the variation in the spectral distribution of the light source) and $\overrightarrow{W}_1$ (after the variation in the spectral distribution of the light source) are normalized in terms of $\overline{W}$ and $\overline{W}$, respectively, the results $\overrightarrow{W}_{n0}$ and $\overrightarrow{W}_{n1}$ are given by

$$\overrightarrow{W}_{n0} = \overrightarrow{W}_0/\overline{W}_0, \overrightarrow{W}_{n1} = \overrightarrow{W}_1/\overline{W}_1. \quad (8)$$

By taking the difference between them one obtains

$$\overrightarrow{W}_{n1} - \overrightarrow{W}_{n0} = (1/\overline{W}_1) \int \overrightarrow{F}(\lambda) \, \delta L(\lambda) d\lambda \quad (9)$$

from which one can estimate the "vector representation" $\overrightarrow{\delta}L$ of $\delta L$ as

$$\overrightarrow{\delta}L = (\delta L(\lambda_0); \delta L(\lambda_0 + \Delta\lambda), \ldots, \delta L(\lambda_0 + (m-1)\,\Delta\lambda))^t$$

In the above equation, $\lambda_0$ and $\lambda_0 + (m-1)\,\Delta\lambda$ represent the lower and upper limits, respectively, of the wavelength region of interest, and $\Delta\lambda$ is a small change of wavelength which may be chosen appropriately so that the integer m can be fixed accordingly. Moreover, $\delta,L$ is defined by

$$\delta L = F^+ (\overrightarrow{W}_{nl} - \overrightarrow{W}_{n0}) (\overrightarrow{W}_1/\Delta\lambda) \quad (10)$$

and $F^+$ is given by $F^+ = MF^t(FMF^t)^{-1}$ with

$$F = \begin{pmatrix} F_1(\lambda_0), & F_1(\lambda_0 + \Delta\lambda), & \ldots, & F_1(\lambda_0 + (m-1)\Delta\lambda) \\ F_2(\lambda_0), & F_2(\lambda_0 + \Delta\lambda), & \ldots, & F_2(\lambda_0 + (m-1)\Delta\lambda) \\ F_3(\lambda_0), & F_3(\lambda_0 + \Delta\lambda), & \ldots, & F_3(\lambda_0 + (m-1)\Delta\lambda) \end{pmatrix}$$

where the subscript t indicates the transposition of a matrix or a vector, and the Markov's covariance matrix is defined by

$$M = \begin{pmatrix} 1 & \varsigma & \varsigma^2 & \cdots & \varsigma^{m-1} \\ \varsigma & 1 & & & \vdots \\ \varsigma^2 & & 1 & & \vdots \\ \vdots & & & \ddots & \vdots \\ \varsigma^{m-1} & \cdots\cdots & & & 1 \end{pmatrix}$$

In the above expressions $\Delta\lambda$ may be taken to be about 10 nm in practice, and the value of about 0.90 will be appropriate for the correlation coefficent p when $\Delta\lambda = 10$ nm.

Now, if it is possible to estimate the variation in the spectral distribution of the light source by means of the signals obtained from the white reference plate according to Eq.(10), then it also becomes possible to estimate the reflected signal for the ink color j when the spectral distribution of the light source has been changed. By calling the spectral reflection factor of the ink color j $Ij(\lambda)$, the estimated value $\overrightarrow{X}_{1j}$ of the normalized signal (output signal of the normalization circuit 11) can be shown to be given by

$$\vec{X}_{1j} = \left( \begin{array}{c} \int I_j(\lambda)\ F_1(\lambda)\ L_1(\lambda)\ d\lambda\ /\ W_{11} \\ \int I_j(\lambda)\ F_2(\lambda)\ L_1(\lambda)\ d\lambda\ /\ W_{12} \\ \int I_j(\lambda)\ F_3(\lambda)\ L_1(\lambda)\ d\lambda\ /\ W_{13} \end{array} \right)$$

$$= \left( \begin{array}{c} \int I_j(\lambda)\ F_1(\lambda)\ aL_0(\lambda)\ d\lambda\ /\ W_{11} \\ \int I_j(\lambda)\ F_2(\lambda)\ aL_0(\lambda)\ d\lambda\ /\ W_{12} \\ \int I_j(\lambda)\ F_3(\lambda)\ aL_0(\lambda)\ d\lambda\ /\ W_{13} \end{array} \right) + \left( \begin{array}{c} \int I_j(\lambda)\ F_1(\lambda)\ \delta L(\lambda)\ d\lambda\ /\ W_{11} \\ \int I_j(\lambda)\ F_2(\lambda)\ \delta L(\lambda)\ d\lambda\ /\ W_{12} \\ \int I_j(\lambda)\ F_3(\lambda)\ \delta L(\lambda)\ d\lambda\ /\ W_{13} \end{array} \right)$$

and taking into consideration the assumption $|aL_0(\lambda)| >> |\delta L(\lambda)|$, which renders an approximation

$$\left( \begin{array}{c} W_{11} \\ W_{12} \\ W_{13} \end{array} \right) = a \left( \begin{array}{c} W_{o1} \\ W_{o2} \\ W_{o3} \end{array} \right) ,$$

it can be approximated as follows.

$$\vec{X}_{1j} = \left( \begin{array}{c} \int I_j(\lambda)F_1(\lambda)L_0(\lambda)\ d\lambda/W_{o1} \\ \int I_j(\lambda)F_2(\lambda)L_0(\lambda)\ d\lambda/W_{o2} \\ \int I_j(\lambda)F_3(\lambda)L_0(\lambda)\ d\lambda/W_{o3} \end{array} \right) + \left( \begin{array}{c} \int I_j(\lambda)F_1(\lambda)\ \delta L(\lambda)\ d\lambda/W_{11} \\ \int I_j(\lambda)F_2(\lambda)\ \delta L(\lambda)\ d\lambda/W_{12} \\ \int I_j(\lambda)F_3(\lambda)\ \delta L(\lambda)\ d\lambda/W_{13} \end{array} \right)$$

$$= \vec{X}_{oj} + \left( \begin{array}{c} \int I_j(\lambda)\ F_1(\lambda)\ \delta L(\lambda)\ d\lambda\ /\ W_{11} \\ \int I_j(\lambda)\ F_2(\lambda)\ \delta L(\lambda)\ d\lambda\ /\ W_{12} \\ \int I_j(\lambda)\ F_3(\lambda)\ \delta L(\lambda)\ d\lambda\ /\ W_{13} \end{array} \right) \qquad \ldots\ldots (11)$$

In Eq.(11), $\vec{W}_{oj}$ is the normalized signal for the normalized ink color j prior to the variation in the spectral distribution of the light source. The second term on the right-hand side of the equation represents the effect of the variation in the spectral distribution of the light source.

Here, if the normalized signal $\vec{W}_{n1}$ of the signal for the white reference plate, after the variation in the spectral distribution of the light source has occurred (spectral distribution at the time of taking measurement), is made to be equal to the corresponding signal $\vec{W}_{no}$ at the time of regulating the device, then there will be obtained $\vec{X}_{1j} = \vec{W}_{oj}$ since the second term of Eq.(11) vanishes with δL given by Eq.(10). In other words, it is demonstrated that if the spectral distribution of the light source is adjusted so as to have the normalized signal, corresponding to the color separated signals obtained by reading the white reference plate, maintained at a constant value for all times, then constant color separated signals will be obtained.

Thus, at the time of turning on the power source for the color picture reader, the light source 2 is arranged by CPU 14 to be turned on by sending a control signal that causes it to have a maximum light intensity to the dimmer unit 16 of the light source 2, and by sending a signal that causes the flow of a maximum current in the controller 15 of the heating element 1. Next, the color separated signal $\vec{W}_1$, that had been obtained in the normalization circuit 11 by reading the black reference plate 3 and the white reference plate 4, is input to the CPU 14. The color separated signal $\vec{W}_1$ is normalized according to Eq.(8) to obtain $\vec{W}_{n1}$. $\vec{W}_{n1}$ is compared with the color separated signal $\vec{W}_{no}$ that was set beforehand (the value obtained at the time of adjusting), and, while making continuous measurement of $\vec{W}_{n1}$, signals are sent from the CPU 14 to the controller 15 and the dimmer unit 16 to yield their respective maximum outputs, until $\vec{W}_{n1}$ becomes equal to $\vec{W}_{no}$.

At the point in time when $\vec{W}_{n1}$ becomes equal to $\vec{W}_{no}$, lighting of the light source 2 is terminated, the temperature information from the temperature sensor 17 which is attached to the heating element 1 is input to the CPU 14, and a control signal is sent to the controller 15 to maintain the temperature at that time.

In this manner, it becomes possible to obtain a spectral distribution of the light source 2 which is constant at all times, and to obtain stabilized color separated signals.

In the above embodiment, when the light source is replaced by one with a different spectral distribution, it may be that the spectral distribution set beforehand may never be realized however long one waits. For some light sources, such as fluorescent lamp, it may be possible to minimize the variation of the spectral distribution by means of a thorough quality control of the products. However, in the case of using such a light source for the purpose of obtaining a constant spectral distribution, the parts to be used have to be limited to some extent. In another embodiment, therefore, there will be described a color picture reader that will have no variation in the color separation characteristics under the influence of the environmental temperature and other factors, even when use is made of a light source which has a different spectral distribution.

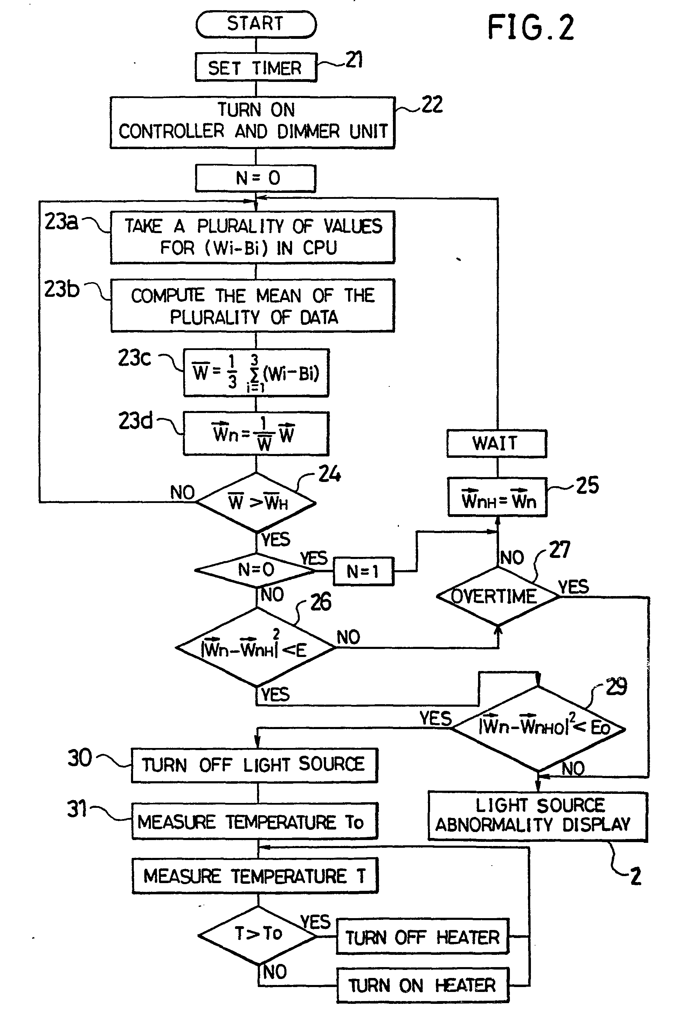

Figure 2 shows a flow chart for controlling the light source in this embodiment of the present invention.

When the power source for the color picture reader is turned on, first the timer in the CPU 14 is set (step 21), and then signals are sent from the CPU 14 to the controller 15 and the dimmer unit 16 *to yield maximum light intensity* of the light source 2 and to turn on the heating element 1 (22). Next, the black reference plate 3 and the white reference plate 4 are read. A plurality (for example, 16) of signals $(W_i - B_i)$ for each of i = 1, 2, and 3 are input to the CPU 14 from the normalization circuit 11 (23a), and their mean is computed (23b). By the use of a plurality of data it becomes possible to reduce the influence of the noise. Further, the mean output $\overline{W}$ of the color separated signals is computed in a manner similar to Eq.(7) (23c), and the normalized color separated signal $\overline{W}_n$ is evaluated similar to Eq.(8) (23d).

Next, it is determined whether or not the mean output $\overline{W}$ of the color separated signals exceeds a fixed light quantity $\overline{W}_H$ (24). If the answer is NO, the black reference plate 3 and the white reference plate 4 are read again and the steps 23a to 23d are repeated, and if the answer is YES, that is, the relation $\overline{W} > \overline{W}_H$ holds, $\overline{W}_n$ is set as $\overline{W}_{nH}$ (25). Then after the elapse of a given length of time, $\overline{W}_n$ is evaluated again (23a – 23d) which is compared with $\overline{W}_{nH}$ (26) to judge whether or not their difference is less than a given value. Namely, the color separated signal is measured at a given time interval (23a – 26), and the light source 2 is kept turned on as long as the output signal does not converge (that is, its variations fail to be less than a given value). Further, this loop includes an operation (27) which checks whether or not the time spent so far exceeds the duration that was set initially (27). When the time exceeds that duration, the light source abnormality display (28) is turned on to indicate that there is some abnormality in the light source.

When the variations in the color separated signal become less than a given value, $\overline{W}_n$ is compared with a predetermined value $\overline{W}_{nHo}$ (29). If the difference between them falls below a given value, the light source 2 is turned off (30), and the temperature $T_0$ on the temperature sensor 17 which is attached to the heating element 1 of the light source 2 is measured (31). If, on the other hand, $\overline{W}_n$ deviates considerably from $\overline{W}_{nHo}$ (that is, if their difference exceeds a given value), the light source abnormality display (28) is turned on to show that there exists some abnormality in the light source 2.

After the temperature $T_0$ of the temperature sensor 17 has been measured, a signal is sent from the CPU 14 to the controller 15 to control the heating element 1 to keep it at the constant temperature $T_0$. It should be mentioned that although the flow chart is shown in the form of a closed loop, when the start button for scanning original is pressed, the processing is arranged to be carried out by interruption. That is, when the start button for scanning original is pressed, the original is read by turning on the light source 2.

From the foregoing, it is clear that it is now possible to scan the original 13 with the spectral distribution of the stabilized light source 2 always constant even when there is a variation in the environmental temperature, and to obtain stable color separated signals. In addition, when the light source 2 is replaced by another light source with a spectral distribution which is different from that of the original light source at the time of its adjustment, stable color separated signals will nevertheless be obtained which are not effected by the temperature of the surroundings.

Moreover, it becomes possible to know when to replace the light source since abnormality thereof is indicated on the display unit 18.

Furthermore, in the foregoing embodiments the descriptions have been given in conjunction with a fluorescent lamp as the light source. However, the light source need not be limited to the fluorescent lamp only. Thus, for example, when a halogen lamp is used as the light source, the spectral distribution will differ for different applied voltages. Even in this case it becomes possible to stabilize the spectral distribution of the light source.

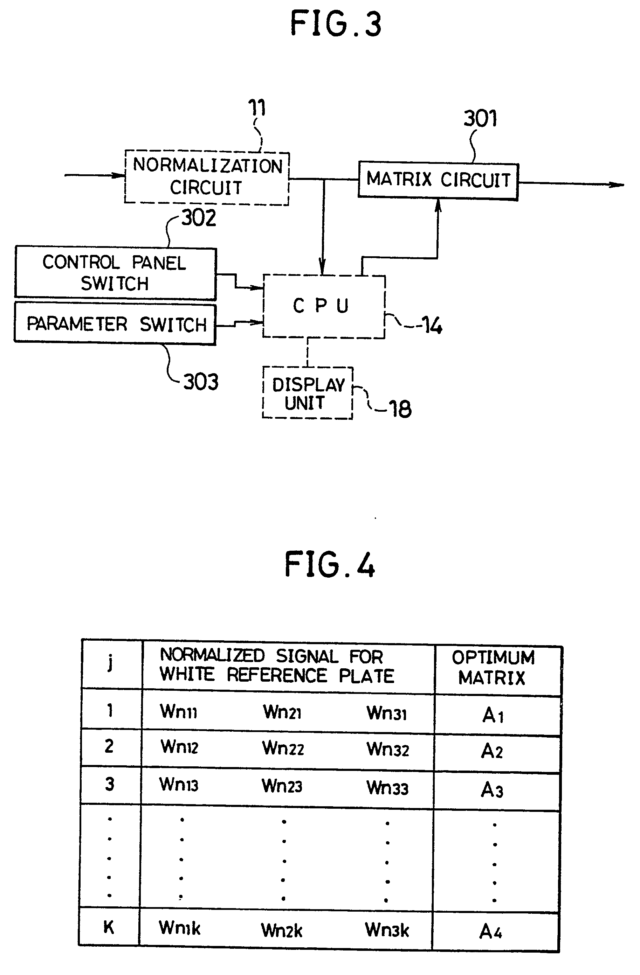

In Fig. 3, there is shown a further embodiment of the color picture reader according to the present invention. In the figure, the normalization circuit 11 and CPU 14 correspond to those shown in Fig. 1, and description of the other components that also appear in Fig. 1 will be omitted. In Fig. 3, reference numeral 301 is a matrix circuit, 302 is a control panel switch, and 303 is a parameter switch.

A special feature of this embodiment is the provision of the matrix circuit 301. The signals that are normalized in the normalization circuit 11 are input to the matrix circuit 301, and an output $Z_i$ (i = 1, 2, and 3) is produced after processing, based on the following.

$$\begin{pmatrix} z_1 \\ z_2 \\ z_3 \end{pmatrix} = \begin{pmatrix} a_{11} & a_{12} & a_{13} \\ a_{21} & a_{22} & a_{23} \\ a_{31} & a_{32} & a_{33} \end{pmatrix} \begin{pmatrix} x_1 \\ x_2 \\ x_3 \end{pmatrix} \quad \cdots \cdots \quad (12)$$

The function of the matrix circuit 301 is to obtain the predetermined color separated signals in accordance with the external interface, to carry out the color correction.

In connection with the first embodiment, it has been shown that the normalized signal $X_{1j}$ for a normalized ink color j after a variation in the spectral distribution of the light source, can be estimated by Eq.(11). The optimum matrix A for the above purpose may be determined by minimizing the deviation $\Delta E$ from the visual system that is given below

$$\Delta E = \sum_{j=1}^{k} \; | \; \overrightarrow{T}_j - M\overrightarrow{X}_{1j} \; |^2 \qquad \cdots\cdots \quad (13)$$

where $\overrightarrow{T}_j$ are the tristimulus values of the vision for the ink color j. Namely, it will be given by

$$A = (\sum_{j=1}^{k} \overrightarrow{T}_j \overrightarrow{X}_{1j}^{\,t}) \; (\sum_{j=1}^{k} \overrightarrow{X}_{1j} \overrightarrow{X}_{1j}^{\,t})^{-1} \qquad \cdots\cdots \quad (14).$$

By setting the matrix A found in this way in the matrix circuit 301 to read the original, it is possible to obtain an output of the matrix circuit 301 which is stable and affected only a small amount by the variation in the light source, even when a variation in the spectral distribution of the light source occurs. The matrix is read from the display unit 18 as the result of computation in the CPU 14, and is input manually to the parameter switch 303. Further, it is possible to construct the CPU so as to input the optimum matrix directly to the matrix circuit 301 based on the inputs from the normalization circuit 11.

In the present embodiment, analogous to the previous embodiment, even when the light source, such as a fluorescent lamp, is switched to a light source that possesses a different spectral distribution, correction is given by estimating the variation in the spectral distribution of the light source, so that stable color separated signals can be obtained.

In addition, by combining the present embodiment with the arrangement for controlling the light source that was shown in connection with the first two embodiments, it becomes possible to obtain more stable color separated signals.

Next, yet another embodiment of the invention will be described. According to the previous embodiment, it was possible to give a color correction by estimating the variation in the spectral distribution of the light source from the signals obtained, by color separating the reflected light from the white reference plate. However, the algorithm for determining the matrix is complicated. Now, it is noted that in an ordinary color picture reader, the light source to be used is limited by the kind of reader and the range of the variation in the spectral distribution is also limited. Accordingly, the color correction will become easier if a table of optimum matrices is prepared with respect to the variations in the light source, for the range of variations that are possible, corresponding to the color separated signals for the reflected light from the white reference plate, and thus determining the matrix required for the color correction.

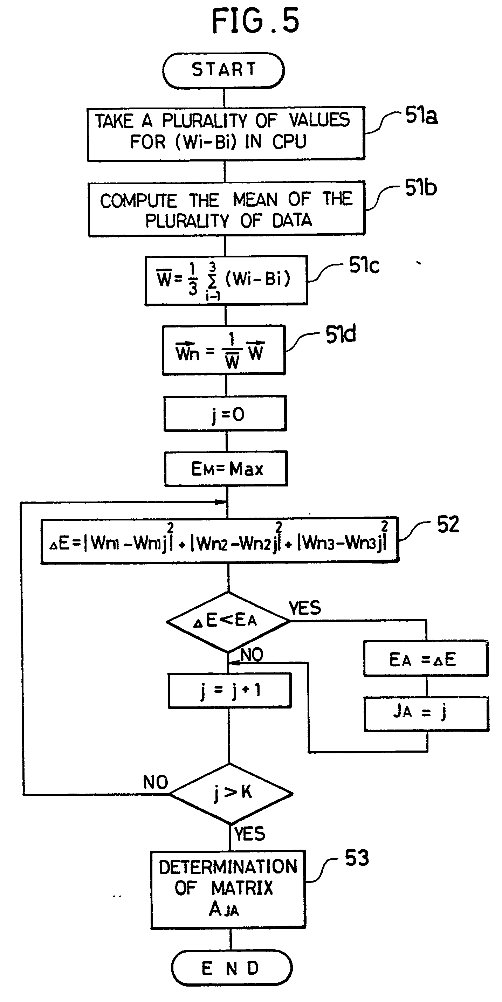

Figure 4 shows these matrices arranged in the form of a table corresponding to the color separated signals, and Fig. 5 shows a flow chart concerning the method for determining the matrix A.

First, analogous to the embodiment described above, the signals $(W_i - B_i)$ for each of i = 1, 2, and 3 are input from the normalization circuit 11 to the CPU 14 (51a), and their means are computed (51b). Next, the mean output $\overline{W}$ of the color separated signals is computed in a manner similar to Eq.(7) (51c), and the normalized color separated signal $\overrightarrow{W}_n$ is evaluated similar to Eq.(8) (51d).

The data in the table, shown in Fig. 4, of optimum matrices $A_j$ that correspond to the normalized color separated signals $W_{nij}$ (i = 1 to 3 and j = 1 to k) are memorized in the CPU 14. Although $W_{nij}$ and $A_j$ may be found from the above computer simulation, the matrix M may also be determined according to Eq.(14) by finding $\overrightarrow{X}_{ij}$ that corresponds to Eq.(11) by experiment.

Namely, by computing

$$\Delta E = |W_{n1} - W_{n1j}|^2 + |W_{n2} - W_{n2j}|^2 + |W_{n3} - W_{n3j}|^2 \qquad (15)$$

based on the color separated signal $\overrightarrow{W}_n$ (52), the matrix that gives the shortest distance to $\overrightarrow{W}_{nj}$ listed in the table of Fig. 4 is selected. In this way the optimum matrix $A_{JA}$ is determined (53), where JA is the value of j selected in the above.

In this embodiment, complicated computations are not needed unlike in the embodiment just mentioned, and the determination of the matrix can be accomplished by the mere computation of the mutual distance among the normalized color separated signals for the white reference plate. Therefore, it is possible to give a satisfactory processing by means of a CPU with 8 bits or so. Furthermore, expressions other than that of Eq.(15) may be employed as the distance $\Delta E$. Thus, for example, $\Delta E$ given by

$$\Delta E = |W_{n1} - W_{n1j}| + |W_{n2} - W_{n2j}| + |W_{n3} - W_{n2j}|$$

instead of Eq.(15) may be used as the criterion. In this case, a faster computational processing will become possible.

Now, still a further embodiment of the present invention will be described. In Fig. 3, the CPU 14 is

8

informed first by the control panel switch 302 or the parameter switch 303 that it is in the light source (fluorescent lamp) checking mode. Then, the CPU carries out an operation similar to that used in the embodiment described above to determine the elements of the optimum matrix. The number j of the optimum matrix is displayed on the display unit 18. The operator then sets the numerical value that appeared on the display unit 18 to the parameter switch 303. In this case, at the usual time of reading the original, the matrix parameters are determined directly by the numerical values on the parameter switch 303, without carrying out the change of parameters of the color correction matrix obtained from the white reference plate. In this manner, it becomes possible to accomplish a fast reading.

In addition, by setting the system to the light source checking mode, it becomes possible to have a check on the abnormality of the emitted light or the time for replacing the light source 2. Namely, when the numerical values of the parameters for correction deviate markedly from the standard values, the state is made to correspond, for example, to the case of j = 1 or j = k of Fig. 4. If it is considered that a correction is difficult to make, then it will be displayed on the display unit 18 that it is either due to an abnormality in the emitted light or it is time to replace the light source. In this way, it becomes possible to detect an abnormality of the light source.

Moreover, in each of the preceding embodiments, the method descriptions have included the use of black and white reference plates. However, needless to say, they may be replaced if detection is by means of direct color separation of the light source.

Furthermore, the variation in the spectral distribution of the light source may be detected by the use of reference plates of specified colors instead of the black and white reference plates. In such a case, it may become possible to detect the variations in the spectral distribution of the light source with higher sensitivity. For instance, in the case of a light source with large variations in the emission spectral distribution in the red region of the spectrum, the variations in the spectral distribution of the light source may be detected by means of a reference plate of a red series. By proceeding in this manner, it becomes possible to detect the variations in the spectral distribution of the light source, and to carry out the more desirable optimum color correction.

Various modifications will become possible for those skilled in the art after receiving the teachings of the present disclosure without departing from the scope of the claims.

## Claims

1. Color picture reader comprising:
— a light source (2) for radiating light on an object (3, 4, 13) to be read
— control means (14, 15) for controlling the light source; and
— light receiving means (6, 7, 8) for receiving light reflected from the object and for generating a plurality of color separated signals from the received light, characterised in that there are provided:
(a) a white reference plate (4) as object to be read;
(b) means (11, 14) for computing a reference value by generating a mean value ($W_{n0}$) of color separated signals from light received from said reference plate and to store the reference value; and
(c) means for comparing an updated mean value ($W_{n1}$) generated from color separated signals from light reflected from the white reference plate, with the reference value ($W_{n0}$);
and in that the means (14, 15) for controlling the light source (2) are controllable so as to minimize the difference between updated value and the reference value.

2. A color picture reader according to claim 1, characterized in that the computing means (11, 14) is arranged to determine said reference value from the color separated signals that are produced by the light receiving means, based on the light from the light source (2) reflected from the reference plate (4) under standard conditions.

3. A color picture reader according to claim 2, characterized in that the control means is arranged to control the light source based on a comparison between normalized reference values and normalized color separated signals.

4. A color picture reader according to claim 3, characterized in that the light source (2) is provided both with a heating element (1) controllable by the control means (15) and with a dimmer unit (16).

5. A color picture reader according to claim 4, characterized in that the control means comprises a CPU (14).

6. A color picture reader according to claim 4 or 5 further characterized by a temperature sensor (17) for measuring the temperature of the light source (2).

7. A color picture reader according to claim 6, further characterized by means for controlling the heating element (1) so as to maintain the temperature of the light source (2) at a temperature memorized as the temperature of the light source (2) at the time of computing the reference value.

8. Method of stabilizing the spectral distribution of the light of a light source in a color picture reader which light source radiates light on an object to be read, which light is reflected from the object and received by light receiving means which generate a plurality of color separated signals from the received light, chaacterized in that:
(a) the light is radiated on a white reference plate and, from the light reflected, a plurality of color separated signals is generated, the mean value of which is stored as a reference value;

9

EP 0 196 405 B1

(b) an updated mean value is generated and compared with the reference value; and

(c) the light source is controlled so as to minimize the difference between the updated value and the reference value.

9. A method according to claim 8 wherein the reference value setting step is further characterized by:

the step of obtaining color separated signals corresponding to the light reflected from a black reference plate (3);

the step of obtaining color separated signals corresponding to the light reflected from the white reference plate (4);

the step of evaluating the difference between the two sets of color separated signals, and of repeating the above two steps until the difference is stabilized; and

the step of setting the difference between the two sets of color separated signals when the difference is stabilized.

10. A method according to claim 9, further characterized by: the step of obtaining a normalized reference value and normalized color separated signals $\vec{W}_n$).

11. A method according to claim 10 characterized in that: the control step (c) is a step in which a fluorescent lamp is used as a light source (2); a heating element (1) is arranged around the fluorescent lamp; and the current in the heating element (1) is controlled based on the difference between the reference value and the color separated signal.

12. A method according to claim 11 further characterized by the step of displaying abnormality of the light source when the difference between the color separated signals for the white and black reference plates (3, 4) does not reduce to a level below a specified value after elapse of a predetermined length of time.

13. A method according to claim 12, further characterized by the step of displaying abnormality of the light source when a normalized color separated signal ($\vec{W}_{nH0}$ deviates more than a given amount from the reference value ($\vec{W}_n$).

14. A method according to claim 11 further characterized by: the step of measuring the temperature of the light source (2) when, in the step for setting the reference value, the difference between the color separated signals for the white and black reference plates (3, 4) is stabilized and the reference value is determined; and the step of maintaining the device at the measured temperature.

15. A color picture reader comprising:

a light source for radiating light on an object (3, 4, 13) to be read; and

light receiving means for receiving light from the object (3, 4, 13) to be read, and for obtaining a plurality of color separated signals based on the light received; characterized by:

(a) a white reference plate (4) as object to be read;

(b) means (11, 14) to compute a reference value by generating a mean value (Wn0) of color separated signals from light received from said reference plate and to store the reference value;

(c) means for comparing an updated mean value (Wn1) generated from color separated signals from light reflected from the white reference plate, with the reference value (Wn0); and

(d) a compensation circuit arranged to set a compensation matrix (A) for correcting said color separated signals obtained in accordance with the variations in the light from the light source based on the output of the comparing means.

16. A color picture reader according to claim 16, characterized in that the matrix (A) to be set in the compensation circuit is given by

$$A = \sum_{j=1}^{k} ( T_j \, X_{1j}^t ) \sum_{j=1}^{k} ( X_{1j} \, X_{1j}^t )^{-1}$$

where Tj representrs color separated signals consisting of the tristimulus values for the ink color j, and $x_{1j}$ represents color separated signals corresponding to the ink color j as estimated from the reference values and the color separated signals, $T_j$.

17. A color picture reader according to claim 15 or 16 further characterized by a matrix parameter input means (303) by which the matrix elements can be input manually.

18. Method of stabilizing the spectral distribution of the light of a light source in a color picture reader which light source radiates light on an object to be read, which light is reflected from the object and received by light receiving means which generate a plurality of color separated signals from the received light, characterized in that:

(a) the light is radiated on a white reference plate and, from the light reflected, a plurality of color separated signals is generated, the mean value of which is stored as a reference value;

(b) an updated mean value is generated and compared with the reference value; and

(c) a compensation matrix is calculated for cancelling variations in the light from the light source (2) based on the reference value and the color separated signals; and

color correction is carried out by transforming the plurality of color separated signals for the object by means of the matrix.

10

19. A method according to claim 18, characterized in that the step for setting the matrix comprises selecting a suitable one from among a plurality of matrices that have been previously prepared.

20. A method according to claim 18 or 19 characterised in that a reference plate of a red series is employed instead of the white reference plate.

**Patentansprüche**

1. Farbbildleser, umfassend
— eine Lichtquelle (2) zum Abstrahlen von Licht auf einen zu lesenden Gegenstand (3, 4, 13);
— eine Steuereinrichtung (14, 15) zum Steuern der Lichtquelle; und
— eine Lichtempfangseinrichtung (6, 7, 8) zum Empfangen von Licht, das von dem Gegenstand reflektiert wurde, und zum Erzeugen mehrerer nach Farben separierter Signale aus dem empfangenen Licht, dadurch gekennzeichnet, daß vorgesehen sind:
(a) eine weiße Referenzplatte (4) als zu lesendes Objekt;
(b) eine Einrichtung (11, 14) zum Berechnen eines Referenzwertes durch Erzeugen eines Mittelwertes $(W_{n0})$ von nach Faben separierten Signalen aus dem Licht, das von der besagten Referenzplatte empfangen wurde, und zum Speichern des Referenzwertes; und
(c) eine Einrichtung zum Vergleichen eines aktualisiertes Mittelwertes $(W_{n1})$, der gebildet wird von nach Farben separierten Signalen aus Licht, das von der weißen Referenzplatte reflektiert wird, mit dem Referenzwert $(W_{n0})$;
und daß die Einrichtung (14, 15) zum Steuern der Lichtquelle (2) so steuerbar ist, daß die Differenz zwischen dem aktualisierten Wert und dem Referenzwert minimiert wird.

2. Farbbildleser nach Anspruch 1, dadurch gekennzeichnet, daß die Recheneinrichtung (11, 14) dafür eingerichtet ist, den besagten Referenzwert von den nach Farben separierten Signalen, welche durch die lichtempfangende Einrichtung gebildet werden, zu bestimmen auf der Basis des Lichtes von der Lichtquelle (2), das von der Referenzplatte (4) unter Standardbedingungen reflektiert wird.

3. Farbbildleser nach Anspruch 2, dadurch gekennzeichnet, daß die Steuereinrichtung dafür eingerichtet ist, die Lichtquelle zu steuern auf der Grundlage eines Vergleichs zwischen normierten Referenzwerten und normierten, nach Farben separierten Signalen.

4. Farbbildleser nach Anspruch 3, dadurch gekennzeichnet, daß die Lichtquelle (2) sowohl mit einem durch die Steuereinrichtung (15) steuerbaren Heizelement (1) als auch mit einer Dimmereinheit (16) versehen ist.

5. Farbbildleser nach Anspruch 4, dadurch gekennzeichnet, daß die Steuereinrichtung eine CPU umfaßt.

6. Farbbildleser nach Anspruch 4 oder 5, ferner gekennzeichnet durch einen Temperaturfühler (17) zum Messen der Temperatur der Lichtquelle (2).

7. Farbbildleser nach Anspruch 6, ferner gekennzeichnet durch eine Einrichtung zum Steuern des Heizelementes (1) derart, daß die Temperatur der Lichtquelle (2) auf der Temperatur gehalten wird, die als Temperatur der Lichtquelle (2) zum Zeitpunkt der Berechnung des Referenzwertes gespeichert wurde.

8. Verfahren der Stabilisierung der spektralen Verteilung des Lichtes einer Lichtquelle in einem Farbbildleser, dessen Lichtquelle Licht auf einen zu lesenden Gegenstand abstrahlt, wobei dieses Licht von dem Gegenstand reflektiert und von einer lichtempfangenden Einrichtung empfangen wird, die mehrere nach Farben separierte Signale aus dem empfangenen Licht erzeugt, dadurch gekennzeichnet, daß
(a) das Licht auf eine weiße Referenzplatte abgestrahlt wird und von dem reflektierten Licht mehrere nach Farben separierte Signale erzeugt werden, deren Mittelwert als ein Referenzwert gespeichert wird;
(b) ein aktualisierter Mittelwert gebildet und mit dem Referenzwert verglichen wird; und
(c) die Lichtquelle so gesteuert wird, daß die Differenz zwischen dem aktualisierten Wert und dem Referenzwert minimiert wird.

9. Verfahren nach Anspruch 8, worin der Schritt zum Setzen des Referenzwertes ferner gekennzeichnet ist durch:
den Schritt zum Erhalten von nach Farben separierten Signalen entsprechend dem von einer schwarzen Referenzplatte (3) reflektierten Licht;
den Schritt zum Erhalten von nach Farben separierten Signalen entsprechend dem von der weißen Referenzplatte (4) reflektrierten Licht;
den Schritt des Bewertens der Differenz zwischen den zwei Sätzen von nach Farben separierten Signalen und des Wiederholens der obigen zwei Schritte, bis die Differenz stabilisiert ist; und
den Schritt des Setzens der Differenz zwischen den zwei Sätzen von nach Farben separierten Signalen, wenn die Differenz stabilisiert ist.

10. Verfahren nach Anspruch 9, ferner gekennzeichnet durch: den Schritt des Erhaltens eines normierten Referenzwertes und von normierten, nach Farben separierten Signalen $(W_n)$.

11. Verfahren nach Anspruch 10, dadurch gekennzeichnet, daß: der Steuerschritt (c) ein Schritt ist, in welchem eine fluoreszierende Lampe als eines Lichtquelle (2) verwendet wird; ein Heizelement (1) umd die fluoreszierende Lampe herum angeordnet wird; und der Strom in dem Heizelement (1) gesteuert wird auf der Grundlage der Differenz zwischen dem Referenzwert und dem nach Farben separierten Signal.

12. Verfahren nach Anspruch 11, ferner gekennzeichnet durch den Schritt des Anzeigens von Anormalität der Lichtquelle, wenn die Differenz zwischen den nach Farben separierten Signalen für die weiße und schwarze Referenzplatte (3, 4) nach Ablauf einer vorbestimmten Zeitdauer sich nicht auf einen Pegel unter einem speziellen Wert vermindert.

13. Verfahren nach Anspruch 12, ferner gekennzeichnet durch den Schritt des Anzeigens von Anormalität der Lichtquelle, wenn ein normiertes, nach Farben separiertes Signal ($W_{nH0}$) vom Referenzwert ($W_n$) um mehr als einen gegebenen Wert abweicht.

14. Verfahren nach Anspruch 11, ferner gekennzeichnet durch: den Schritt des Messens der Temperatur der Lichtquelle (2), wenn beim Schritt des Setzens des Referenzwertes die Differenz zwischen den nach Farben separierten Signalen für die weiße und schwarze Referenzplatte (3, 4) stabilisiert und der Referenzwert bestimmt wird; und den Schritt des Haltens der Vorrichtung auf der gemessenenen Temperatur.

15. Farbbildleser, umfassend:

Eine Lichtquelle zum Abstrahlen von Licht auf einen zu lesenden Gegenstand (3, 4, 13); und

eine lichtempfangende Einrichtung zum Empfangen von Licht von dem zu lesenden Gegenstand (3, 4, 13) und zum Erhalten mehrerer nach Farben separierter Signale, denen das empfangene Licht zugrundeliegt;

gekennzeichnet durch:

(a) eine weiße Referenzplatte (4) als einem zu lesenden Gegenstand;

(b) eine Einrichtung zum Berechnen eines Referenzwertes durch Bilden eines Mittelwertes (Wn0) von nach Farben separierten Signalen aus dem Licht, das von der besagten Referenzplatte empfangen wurde, und zum Speichern des Referenzwertes;

(c) eine Einrichtung zum Vergleichen eines aktualisierten Mittelwertes (Wn1), der von nach Farben separierten Signalen aus Licht gebildet wird, das von der weißen Referenzplatte reflektiert wird, mit dem Referenzwert (Wn0); und

(d) eine Kompensationsschaltung, die dafür eingerichtet ist, eine Kompensationsmatrix (A) einzustellen zum Korrigieren des besagten nach Farben separierten Signale, die erhalten werden entsprechend den Änderungen im Licht von der Lichtquelle auf der Grundlage des Ausgangssignals der Vergleichseinrichtung.

16. Farbbildleser nach Anspruch 15, dadurch gekennzeichnet, daß die in der Kompensationsschaltung einzustellende Matrix (A) bestimmt ist durch

$$A = \sum_{j=1}^{k} ( T_j \, x_{1j}^t ) \sum_{j=1}^{k} ( x_{1j} \, x_{1j}^t )^{-1}$$

worin $T_j$ die nach Farben separierten Signale darstellt, die aus den dreifach stimulierten Werten für die Druckfarbe j bestehen, und $x_{ij}$ nach Farben separierte Signale darstellt entsprechend der Druckfarbe j, wie sie von den Referenzwerten und den nach Farben separierten Signalen $T_j$ geschätzt werden.

17. Farbbildleser nach Anspruch 15 oder 16, ferner gekennzeichnet durch eine Einrichtung (303) zur Eingabe von Matrixparametern, durch welche die Matrixelemente von Hand eingegeben werden können.

18. Verfahren der Stabilisierung der spektralen Verteilung des Lichtes einer Lichtquelle in einem Farbbildleser, dessen Lichtquelle Licht auf einen zu lesenden Gegenstand abstrahlt, wobei dieses Licht von dem Gegenstand reflektiert und von einer lichtempfangenden Einrichtung empfangen wird, die mehrere nach Farben separierte Signale aus dem empfangenen Licht erzeugt, dadurch gekennzeichnet, daß

(a) das Licht auf eine weiße Referenzplatte abgestrahlt wird und vom dem reflektieteen Licht mehrere nach Farben separierte Signale erzeugt werden, deren Mittelwert als ein Referenzwert gespeichert wird;

(b) ein aktualisierter Mittelwert gebildet und mit dem Referenzwert verglichen wird; und

(c) eine Kompensationsmatrix berechnet wird zum Beseitigen von Änderungen im Licht von der Lichtquelle (2) auf der Grundlage des Referenzwertes und der nach Farben separierten Signale; und

eine Farbkorrektur ausgeführt wird durch Transformieren der mehreren nach Farben separierten Signale für den Gegenstand mittels der Matrix.

19. Verfahren nach Anspruch 18, dadurch gekennzeichnet, daß der Schritt der Einstellung der Matrix des Auswählen einer geeigneten von mehreren Matrices umfaßt, die vorher vorbereitet wurden.

20. Verfahren nach Anspruch 18 oder 19, dadurch gekennzeichnet, daß eine Referenzplatte aus einer roten Serie anstelle der weißen Referenzplatte verwendet wird.

**Revendications**

1. Lecteur d'images en couleurs comprenant:

une source (2) de lumière pour irradier de la lumière sur un objet (3, 4, 13) devant être lu;

des moyens de commande (14, 15) pour commander la source de lumière; et

des moyens (6, 7, 8) récepteurs de lumière pour recevoir la lumière réfléchie par l'objet et pour

EP 0 196 405 B1

engendrer à partir de la lumière reçue une pluralité de signaux de couleur séparés; caractérisé en ce qu'il comprend en outre:

(a) une plaque de référence blanche (4) en tant qu'objet à lire;

(b) des moyens (11, 14) pour calculer une valeur de référence en engendrant à partir de la lumière reçue de la plaque de référence une valeur moyenne ($W_{n0}$) de signaux de couleur séparés et pour mémoriser la valeur de référence;

(c) un moyen pour comparer avec la valeur de référence ($W_{n0}$) la valeur moyenne actualisée ($W_{n1}$) engendrée à partir des signaux de couleur séparés provenant de la lumière réfléchie par la plaque de référence blanche;

et en ce que les moyens (14, 15) pour commander la source (2) de lumière peuvent être commandés de manière à minimiser la différence entre la valeur actualisée et la valeur de référence.

2. Lecteur d'images en couleurs selon la revendication 1, caractérisé en ce que le moyen de calcul (11, 14) est agencé de manière à déterminer la valeur de référence à partir des signaux de couleurs séparés produits par les moyens récepteurs de lumière en se basant sur la lumière de la source (2) de lumière réfléchie par la plaque de référence (4) dans des conditions normales.

3. Lecteur d'images en couleurs selon la revendication 2, caractérisé en ce que le moyen de commande est agencé de manière à commander la source de lumière en se basant sur une comparaison entre les valeurs de référence normalisées et les signaux de couleur séparés normalisés.

4. Lecteur d'images en couleurs selon la revendication 3, caractérisé en ce que la source (2) de lumière est pourvue à la fois d'un élément de chauffage (1) pouvant être commandé par le moyen de commande (15) et d'un variateur (16) de lumière.

5. Lecteur d'images en couleurs selon la revendication 4, caractérisé en ce que le moyens de commande comprend une CPU (14).

6. Lecteur d'images en couleurs selon la revendication 4 ou 5, caractérisé en outre par un détecteur (7) de température pour mesurer la température de la source (2) de lumière.

7. Lecteur d'images en couleurs selon la revendication 6, caractérisé en ce outre par un moyens servant à commander l'élément de chauffage (1) de manière à maintenir la température de la source (2) de lumière à une température mémorisée comme étant la température de la source (2) de lumière au moment du calcul de la valeur de référence.

8. Procédé pour stabiliser la distribution spectrale de la lumière d'une source de lumière dans un lecteur d'images en couleurs, cette source de lumière irradiant de la lumière sur un objet à lire, cette lumière étant réfléchie par l'objet et reçue par un moyen de réception de lumière qui engendre à partir de la lumière reçue une pluralité de signaux de couleur séparés, caractérisé en ce que:

(a) la lumière est irradiée sur une plaque de référence blanche et, à partir de la lumière réfléchie, une pluralité de signaux de couleur séparés est engendrée, la valeur moyenne de ces signaux étant mémorisée en tant que valeur de référence;

(b) une valeur moyenne actualisée est engendrée et comparée avec la valeur de référence; et

(c) la source de lumière est commandée de manière à minimiser la différence entre la valeur actualisée et la valeur de référence.

9. Procédé selon la revendication 8, dans lequel l'étape d'établissement de référence est en outre caractérisée par:

l'étape d'obtention de signaux de couleur séparés correspondant à la lumière réfléchie par une plaque de référence noire (3);

l'étape d'obtention de signaux de couleur séparés correspondant à la lumière réfléchie par la plaque de référence blanche (4);

l'étape d'évaluation de la différence entre les deux ensembles de signaux de couleurs séparés et de répétition des deux étapes ci-dessus jusqu'à ce que la différence soit stabilisée; et

l'étape d'etablissement de la différence entre les deux ensembles de signaux de couleurs séparés quand la différence est stabilisée.

10. Procédé selon la revendication 9, caractérisé en outre par l'étape d'obtention d'une valeur de référence normalisée de signaux de couleur normalisés ($W_n$).

11. Procédé selon la revendication 10, caractérisé en ce que: l'étape de commande (c) est une étape dans laquelle une lampe fluorescente est utilisée comme source (2) de lumière; un élémente de chauffage (1) est disposé autour de la lampe fluorescente; et le courant dans l'élément de chauffage (1) est commandé sur la base de la différence entre la valeur de référence et le signal de couleur séparé.

12. Procédé selon la revendication 11, caractérisé en outre par l'étape d'affichage d'anormalité de la source lumineuse quand la différence entre les signaux de couleur séparés relatifs aux plaques de référence blanche et noire (3, 4) ne diminue pas jusqu'à un niveau situé en dessous d'une valeur spécifiée après l'écoulement d'une période de temps prédéterminée.

13. Procédé selon la revendication 12, caractérisé en outre par l'étape d'affichage d'anormalité de la source de lumière quand un signal de couleur séparé normalisé ($W_{nH0}$) s'écarte de la valeur de référence ($W_n$) au-delà d'une quantité donnée.

14. Procédé selon la revendication 11, caractérisé en outre par: l'étape de mesure de la température de la source (2) de lumière lorsque, au cours de l'étape d'établissement de valeur de référence, la différence entre les signaux de couleur séparés relatifs aux plaques de référence blanche et noire (3, 4) est stabilisée et

13

la valeur de référence est déterminée; et l'étape de maintien du dispositif à la température mesurée.

15. Lecteur d'images en couleurs comprenant:

une source de lumière pour irradier de la lumière sur un objet (3, 4, 13) devant être lu; et

un moyen récepteur de lumière pour recevoir la lumière en provenance de l'objet (3, 4, 13) devant être lu et pour obtenir une pluralité de signaux de couleur séparés sur la base de la lumière reçue; caractérisé:

(a) une plaque de référence blanche (4) en tant qu'objet à lire;

(b) un moyen (11, 14) pour calculer une valeur de référence en engendrant une valeur moyenne (Wn0) de signaux de couleur séparés à partir de la lumière reçue de la plaque de référence et pour mémoriser la valeur de référence;

(c) un moyen pour comparer avec la valeur de référence (Wn0) une valeur moyenne actualisée (Wn1) engendrée à la partir des signaux de couleur séparés provenant de la lumière réfléchie par la plaque de référence blanche.

(d) un circuit de compensation agencé de manière à établir une matrice de compensation (A) pour corriger les signaux de couleur séparés en conformité avec les variations de la lumière de la source de lumière en se basant sur la sortie du moyen de comparaison.

16. Lecteur d'images en couleurs selon la revendication 16, caractérisé en ce que la matrice (A) devant être établie dans le circuit de compensation est donnée par:

$$A = \sum_{j=1}^{k} ( T_j \, X_{1j}^{t} ) \sum_{j=1}^{k} ( X_{1j} \, X_{1j}^{t} )^{-1}$$

où Tj représente les signaux de couleur séparés constitués par les valeur trichromatiques relatifs à la couleur d'encre j et $X_{ij}$ représente les signaux de couleur séparés correspondant à la couleur d'encre j estimée d'après les valeurs de référence et des signaux de couleur séparés Tj.

17. Lecteur d'images en couleurs selon la revendication 15 ou 16, caractérisé en outre par un moyens (303) d'entrée de paramètres de matrice à l'aide duquel les éléments de la matrice peuvent être entrés manuellement.

18. Procédé de stabilisation de la distribution spectrale de la lumière d'une source de lumière dans un lecteur d'images en couleurs, cette source lumineuse irradiant de la lumière sur un objet devant être lu, cette lumière étant réfléchie par l'objet et reçue par un moyen récepteur qui engendre à partir de la lumière reçue une pluralité de signaux de couleur séparés, caractérisé en ce que:

(a) la lumière est irradiée sur une plaque de référence de référence blanche et, à partir de la lumière réfléchie, une pluralité de signaux de coueleur séparés est engendrée, la valeur moyenne de ces signaux étant mémorisés en tant que valeur de référence;

(b) une valeur moyenne actualisée est engendrée et est comparée avec la valeur de référence; et

(c) une matrice de compensation est calculée pour annuler les variations de la lumière de la source (2) de lumière sur la base de la valeur de référence et des signaux de couleur séparés; et

une correction de couleur est effectuée au moyen de la matrice par transformation de la pluralité des signaux de couleur séparés relatifs à l'objet.

19. Procédé selon la revendication 18, caractérisé en ce que l'étape pour établir la matrice comprend la sélection d'une matrice appropriée parmi une pluralité de matrices qui ont été préparées préalablement.

20. Procédé selon la revendication 18 ou 19, caractérisé en ce qu'une plaque de référence de la série rouge est utilisée à la place de la plaque de référence blanche.

# FIG .1

FIG.2

```
                    ( START )

                   [ SET TIMER ]——21

            ┌─────────────────────────┐
            │         TURN ON         │——22
            │ CONTROLLER AND DIMMER UNIT │
            └─────────────────────────┘

                   [    N = O    ]

      ┌──────────────────────────────────────────┐
      │  23a─[ TAKE A PLURALITY OF VALUES         │
      │        FOR (Wi-Bi) IN CPU        ]        │
      │                                          │
      │  23b─[ COMPUTE THE MEAN OF THE           │
      │        PLURALITY OF DATA         ]        │
```

$23c$ $\quad \overline{W} = \dfrac{1}{3} \sum\limits_{i=1}^{3} (Wi-Bi)$

$23d$ $\quad \vec{W}n = \dfrac{1}{\overline{W}} \vec{W}$

WAIT

$\text{NO} \quad \overline{W} > \overline{W}_H \quad$ 24

$25 \quad \vec{W}_{nH} = \vec{W}_n$

$\text{YES}$

$N=O \quad \xrightarrow{\text{YES}} \quad N=1$

$\text{NO}$

$27 \quad \text{OVERTIME} \quad \xrightarrow{\text{YES}}$

$\text{NO}$

$26 \quad |\vec{W}n - \vec{W}_{nH}|^2 < E \quad \xrightarrow{\text{NO}}$

$\text{YES}$

$29 \quad |\vec{W}n - \vec{W}_{nHO}|^2 < E_O$

$\xrightarrow{\text{YES}}$

$\text{NO}$

30—[ TURN OFF LIGHT SOURCE ]

31—[ MEASURE TEMPERATURE To ]

LIGHT SOURCE
ABNORMALITY DISPLAY ——2

[ MEASURE TEMPERATURE T ]

$T > To \quad \xrightarrow{\text{YES}} \quad$ [ TURN OFF HEATER ]

$\text{NO}$

[ TURN ON HEATER ]

# FIG.3

NORMALIZATION CIRCUIT 11

MATRIX CIRCUIT 301

CONTROL PANEL SWITCH 302

PARAMETER SWITCH 303

CPU 14

DISPLAY UNIT 18

# FIG.4

| j | NORMALIZED SIGNAL FOR WHITE REFERENCE PLATE | | | OPTIMUM MATRIX |
|---|---|---|---|---|
| 1 | $Wn_{11}$ | $Wn_{21}$ | $Wn_{31}$ | $A_1$ |
| 2 | $Wn_{12}$ | $Wn_{22}$ | $Wn_{32}$ | $A_2$ |
| 3 | $Wn_{13}$ | $Wn_{23}$ | $Wn_{33}$ | $A_3$ |
| $\vdots$ | $\vdots$ | $\vdots$ | $\vdots$ | $\vdots$ |
| K | $Wn_{1k}$ | $Wn_{2k}$ | $Wn_{3k}$ | $A_4$ |

3

# FIG.5

START

TAKE A PLURALITY OF VALUES FOR (Wi-Bi) IN CPU — 51a

COMPUTE THE MEAN OF THE PLURALITY OF DATA — 51b

$$\overline{W} = \frac{1}{3} \sum_{i=1}^{3} (Wi-Bi)$$ — 51c

$$\overrightarrow{Wn} = \frac{1}{\overline{W}} \overrightarrow{W}$$ — 51d

j = 0

Em = Max

$$\Delta E = |Wn_1 - Wn_1j|^2 + |Wn_2 - Wn_2j|^2 + |Wn_3 - Wn_3j|^2$$ — 52

$\Delta E < EA$  YES → $EA = \Delta E$

NO

$EA = \Delta E$

$JA = j$

j = j + 1

j > K  NO

YES

DETERMINATION OF MATRIX $A_{JA}$ — 53

END